**Europäisches Patentamt**

**European Patent Office**

**Office européen des brevets**

(19)

(11) Veröffentlichungsnummer: **0 108 196**
**B1**

(12)

# EUROPÄISCHE PATENTSCHRIFT

(45) Veröffentlichungstag der Patentschrift:
**07.01.88**

(21) Anmeldenummer: **83107447.1**

(22) Anmeldetag: **28.07.83**

(51) Int. Cl.⁴: **B 65 G 65/38,** B 65 D 88/74,
B 65 D 88/54

(54) Verfahren zum Füllen und Entleeren eines Silos.

(30) Priorität: **08.11.82 DE 3241150**

(43) Veröffentlichungstag der Anmeldung:
**16.05.84 Patentblatt 84/20**

(45) Bekanntmachung des Hinweises auf die Patenterteilung:
**07.01.88 Patentblatt 88/1**

(84) Benannte Vertragsstaaten:
**AT BE CH DE FR GB IT LI NL SE**

(56) Entgegenhaltungen:
**DE - A - 1 933 337**
**FR - A - 2 224 075**
**NL - A - 7 514 774**
**SU - A - 175 887**
**US - A - 3 358 856**

(73) Patentinhaber: **CLAUDIUS PETERS AKTIENGESELLSCHAFT, Kapstadtring 1, D-2000 Hamburg 60 (DE)**

(72) Erfinder: **Färber, Ernst-Ove, Dipl.-Ing. (FH), Grosse Lohe 7, D-2359 Henstedt-Ulzburg 1 (DE)**

(74) Vertreter: **Glawe, Delfs, Moll & Partner Patentanwälte, Postfach 26 01 62 Liebherrstrasse 20, D-8000 München 26 (DE)**

## Beschreibung

Die Erfindung betrifft ein Verfahren zum Füllen und Entleeren eines Silos zum Lagern von im Beschickungszustand fliessfähigem und sich im Laufe der Lagerzeit verfestigendem Schüttgut, insbesondere Flugasche, mit einem auf der Oberfläche des eingelagerten Schüttguts bewegbaren Förderer zum Fördern von oberflächlich abgekratztem oder abgeschältem Schüttgut zu einem im Silo an einer im wesentlichen senkrechten Silowand angeordneten, das Gut fallend zu einer am Siloboden vorgesehenen Auslauföffnung befördernden Förderweg, der über seine Höhe mit dem Siloraum in Verbindung steht und eine sich über seine Länge erstreckende Belüftungseinrichtung zum Auflockern von im Förderweg befindlichem Schüttgut umfasst.

Die Erfindung bezieht sich ferner auf einen Silo zur Durchführung dieses Verfahrens.

Die in Kohlekraftwerken anfallende Flugasche wird in der Zementindustrie zur Herstellung von Aschezement verwendet. In den Wintermonaten fällt mehr Flugasche an als in den Sommermonaten, während in den Sommermonaten mehr Zement produziert wird als in den Wintermonaten. Aus diesem Grunde müssen Grossraumsilos die Ascheproduktion aus den Wintermonaten aufnehmen, damit sie in den Sommermonaten zur Verfügung steht. Bei der Lagerung von Flugasche treten jedoch Schwierigkeiten auf, weil Flugasche hygroskopisch ist. Während sie im lockeren Zustand bei der Einlagerung ausgesprochen fliessfreudig ist, verfestigt sie sich nach einer gewissen Lagerzeit so stark, dass sie mit pneumatischen Mitteln kaum noch wirtschaftlich in den Fliesszustand zurückversetzt werden kann. Für den Abzug der Asche verwendet man daher in bekannten Grossraumsilos mechanische Förderer, die auf der Oberfläche des eingelagerten Guts an einer Trägerkonstruktion sowohl radial als auch horizontal bewegt werden können und das oberflächlich gelöste Gut von aussen zur Mitte zu einer hohlen Mittelsäule fördern, wo es von einem am Umfang der Säule umlaufenden Schaufelkratzer erfasst wird, der es kreisförmig um die Säule herumschiebt, bis es an einer der in der Säule befindlichen Öffnungen zum Säulenhohlraum austreten kann (US-A 3 358 856). Den Ausgangspunkt der Erfindung bildet die durch offenkundige Vorbenutzung bekannt gewordene praktische Ausführung dieser Silos. Bei dieser Ausführung sind bei den über die Höhe der Säule verteilt angeordneten Öffnungen jeweils Schieber vorgesehen, mit denen die inaktiven Öffnungen verschlossen werden könnten. Dadurch soll verhindert werden, dass der Säulenhohlraum bei der Füllung des Silos vollläuft, das darin befindliche sich verfestigende Gut den Abzug behindert. Die Anordnung hat den Nachteil, dass die Schieber und deren Betätigungseinrichtungen störungsanfällig und aufwendig sind.

Bei einer weiteren bekannten Siloausführung (DE-A 19 33 337) soll die Notwendigkeit von Schiebern dadurch vermieden werden, dass die zum Inneren des Fallkanals führenden Öffnungen zwischen ihrer äusseren Oberkante und inneren Unterkante eine Schräge einschliessen, die kleiner ist als der Böschungswinkel des Guts, so dass dies nur durch die Einwirkung des auf der Gutoberläche arbeitenden Förderers durch die Öffnung in den Kanal eingeschoben werden kann. Da jedoch das Gut während des Beschickens sehr fliessfreudig ist, muss die Schräge sehr steil sein und ist daher beim Abzugsbetrieb sehr störend. Zur Sicherung gegen Betriebsstörungen wird dabei ferner vorgeschlagen, über die ganze oder teilweise Länge des Fallkanals z.B. ein perforiertes Rohr für Druckluftzufuhr vorzusehen, aber zum Auflockern von im Fallkanal verfestigtem Gut ist es nicht geeignet und dank der oben erläuterten Ausbildung der Öffnungen auch nicht erfoderlich.

Ferner ist ein Silo für Viehfutter, beispielsweise Gras, bekannt (NL-A 75 14 774), das neben dem Hauptsiloraum einen Fallkanal aufweist, der vom Siloraum durch Platten abgetrennt ist, die einzeln entfernbar sind zur Bildung einer Öffnung im Bereich der Gutoberfläche, durch die mitttels eines mechanischen Förderers das von der Oberfläche abgekratzte Gut in den Fallkanal befördert werden kann, in welchem es sich unter seinem Eigengewicht und der Einwirkung eines Gebläseluftstroms nach unten bewegt. Die Abtrennung des Förderkanals vom Siloraum sowie die Bildung einer Durchlassöffnung in Höhe der Gutoberfläche sind aufwendig, störungsanfällig und umständlich.

Der Erfindung liegt die Aufgabe zugrunde, ein Verfahren der eingangs genannten Art zu schaffen, das den Aufwand und die Störungsanfälligkeit der Abtrennung des Siloraums vom fallenden Förderweg vermeidet.

Die erfindungsgemässe Lösung besteht darin, dass beim Füllen des Silos auch der Förderweg gefüllt wird und das ihn füllende Schüttgut erst dann aufgelockert und entleert wird, wenn das Schüttgut im Siloraum sich so weit verfestigt hat, dass es bei Entleerung des Förderwegs nicht mehr in diesen nachfliesst.

Ebenso wie der Stand der Technik geht die Erfindung von der Erkenntnis aus, dass das im Siloraum befindliche Material daran gehindert werden muss, in solcher Weise in den Förderweg einzudringen, dass die Förderung dadurch zerstört wird. Jedoch bewirkt sie dies nicht durch aufwendige und störungsanfällige Absperrmittel, sondern durch Ausnutzung der Eigenfestigkeit des verfestigten Guts. Da diese erst nach einer gewissen Lagerzeit erreicht wird, setzt dies voraus, dass man zunächst die Füllung des Förderwegs mit dem Schüttgut duldet und in Kauf nimmt, dass dieses Schüttgut anschliessend pneumatisch aufgebrochen werden muss, um entleert werden zu können. Zwar trifft die oben getroffene Feststellung zu, dass sich verfestigte Flugasche mit den üblichen, am Siloboden vorgesehenen Belüftungseinrichtungen in einem Grossraumsilo nicht in einem solchen Masse lockern lässt, dass dadurch ein hinreichend williges Auslaufen des Materials erzielt werden kann. Jedoch ist es durchaus möglich, das in der unmittelbaren Nachbarschaft von Belüftungseinrichtungen befindliche Gut durch Belüftung wieder fliessfähig zu machen. Mindestens ist dies dann möglich, wenn anfangs kurzzeitig mit sehr starkem Überdruck belüftet wird. Zwar würde diese Massnahme bei am Boden eines Grossraumsilos befindlichen Belüftungseinrichtungen nicht ausreichen. Jedoch beruht die Erfindung auf der Feststellung, dass durch die an der Silowand befindlichen Belüftungseinrichtungen das Gut in deren Nachbarschaft so weit aufgelockert werden kann, dass zunächst dieses durch Belüftung fliessfähig gemachte Gut und später das von den an der Gutoberfläche arbeitenden mechanischen Fördermitteln aufgelockerte und dorthingeförderte Gut abfliessen kann.

Die Erfindung lässt im wesentlichen zwei Möglichkeiten der fallenden Förderung des Guts gesondert oder in Kombination zu. Bei der einen Ausführungsmöglichkeit bilden die Belüftungseinrichtungen am Umfang der Säule eine derart ununterbrochene Folge, dass sie zur Bildung eines in dem sonst verfestigten Material durchgehenden Kanal aufgelockerten Guts führen, wobei in diesem Kanal das oben durch die mechanischen Fördermittel aufgegebene Material nach unten abläuft. Die Siloauslassöffnung kann dann am Fuss der Säule vorgesehen sein. Statt dessen kann die Säulenwand auch in Bodennähe eine Durchtrittsöffnung zu dem innerhalb der hohlen Säule angeordneten Siloauslass aufweisen.

Bei dieser Ausführungsform wird der von der Folge der Belüftungseinrichtungen gebildete Förderkanal bei Betriebsbeginn zweckmässigerweise dadurch eröffnet, dass die Belüftungseinrichtungen fallend schrittweise von oben nach unten bis zur Bildung eines durchgehend aufgebrochenen Gutsweges eingeschaltet werden. Dabei wird die angewendete Luftpressung gemäss den Eigenschaften des eingelagerten Guts so bemessen, dass das Aufbrechen des Materials mit hinreichender Sicherheit zustande kommt. Oftmals ist es nicht notwendig, diese starke Pressung auch später im laufenden Betrieb aufrechtzuerhalten, weil es dann sich nur noch darum handelt, das von oben nachfliessende, mechanisch aufgelockerte Gut während seiner Abwärtsförderung hinreichend fliessfähig zu halten. Dafür genügt im allgemeinen eine verhältnismässig schwache Belüftung. Ggf. reicht es sogar aus, nur einen Teil der in der Folge vorhandenen Belüftungseinrichtung mit Druckluft zu beaufschlagen, während andere unbelüftet bleiben.

Gemäss der anderen Ausführungsmöglichkeit der Erfindung findet die Abwärtsförderung des Guts innerhalb der hohl ausgebildeten Säule statt. Durch über die Höhe der Säule verteilte Durchtrittsöffnungen kann das im Siloraum befindliche Gut in den Säulenhohlraum übertreten. In diesem Falle können die Belüftungseinrichtungen gemäss der Erfindung in den Öffnungen, d.h. in den Laibungen der Öffnungen oder in unmittelbarer Nähe der Öffnungen, vorgesehen sein.

Damit bei Anordnung der Belüftungselemente in oder an den Säulenöffnungen auch bei Betriebsbeginn ein hinreichender Auflockerungseffekt in den Siloraum hineinwirkt, verfährt man zweckmässigerweise so, dass dann die Belüftungseinrichtungen bei gefülltem Säuleninnenraum eingeschaltet werden. Es hat sich gezeigt, dass eine Füllung des Säuleninnenraums und eine Verfestigung des dort befindlichen Guts dann unschädlich ist, wenn im Säuleninnenraum starke pneumatische Auflockerungseinrichtungen vorgesehen sind. Diese wirken nämlich innerhalb der Säule auf einen vergleichsweise sehr kleinen Querschnittsbereich, so dass ihre Wirkung sich nicht unkontrolliert in der Weite verlieren kann, wie es im grossen Siloraum der Fall wäre.

Wenn man eine zu starke Verfestigung des in der Hohlsäule befindlichen Gutes vermeiden will, so kann man zunächst die Füllung der Säule durch das fliessfreudige Gut dulden und dann, wenn das Gut im Hauptsiloraum so weit verfestigt ist, dass es bei Entleerung des Säuleninnenraums nicht mehr nachfliesst, den Säuleninnenraum durch dafür vorgesehene Umfördereinrichtungen in den Hauptsiloraum entleeren. Setzt man zum Transport des aus dem Silo abgezogenen Guts eine Schneckenpumpe ein, das ist eine Förderschnecke, die das Schüttgut einer pneumatischen Förderleitung zuführt, so kann diese für diese Umförderung genutzt werden.

Ein Silo zur Durchführung des Verfahrens zeichnet sich dadurch aus, dass der Förderweg dem im Beschickungszustand befindlichen Schüttgut frei zugänglich ist und die Belüftungseinrichtungen von einer Folge von schrittweise von oben nach unten einschaltbaren Belüftungselementen gebildet sind.

Besonders vorteilhaft ist es, wenn die Belüftungseinrichtungen am Umfang der von einem Kratzer umlaufenen zentralen Säule angeordnet sind. Während bei den bekannten Silos mit von einem Kratzer umlaufener Mittelsäule der Kratzer im festen Material arbeitet und daher entsprechendem Verschleiss ausgesetzt ist, bildet sich im Zusammenhang der Erfindung um die Säule herum ein pneumatisch fluidisierter Mantel, in welchem der Kratzer mit geringem Kraftaufwand nur mit einem sich im wesentlichen flüssigkeitsähnlich verhaltenden Material in Berührung tritt und daher nur geringem Verschleiss unterworfen ist. Seine Aufgabe besteht, wie bei den bekannten Anlagen, darin, das im Mantelbereich der Säule befindliche Material zu derjenigen Umfangsstelle hin zu befördern, von der aus es abfliessen kann.

Auch wenn die Belüftungseinrichtungen in den Laibungen der Öffnungen oder in unmittelbarer Nähe der Öffnungen vorgesehen sind, tritt erfahrungsgemäss ein hinreichender Luftanteil nach aussen in den Siloraum aus, um bei Betriebsbeginn das dort befindliche Material aufzulockern und während des fortdauernden Betriebs in den Mantelbereich der Säule, in welchem der Kratzer umläuft, für eine die Kratzerreibung vermindernde Fluidisierung zu sorgen. Jedoch können selbstverständlich, um den letzteren Effekt zu verbessern, die Belüftungseinrichtungen auch in Entfernung von den Durchtrittsöffnungen am Säulenumfang ausschliesslich oder zusätzlich angeordnet sein.

Zweckmässigerweise umläuft die Folge der Belüftungselemente die Säule schraubenförmig, wobei mehrere Belüftungsreihen vorgesehen sein können, beispielsweise drei um jeweils 120° versetzte Reihen.

Der Begriff Folge von Belüftungseinrichtungen ist im Rahmen der Erfindung so zu verstehen, dass bei derjenigen Ausführungsform, bei welcher durch die Belüftungseinrichtungen ein durchgehender, fluidisierter Förderkanal entstehen soll, die Belüftungseinrichtungen hinreichend dicht in fallender Folge aneinander anschliessen müssen. Die Bildung eines solchen durchgehenden Kanals kann auch dann erwünscht sein, wenn über die Höhe der Säule verteilt viele Durchtrittsöffnungen vorgesehen sind, so dass gleichzeitig eine Mehrzahl solcher Durchtrittsöffnungen für die Übernahme des Guts herangezogen werden kann. Jedoch kann dann, wenn in jeder Arbeitshöhe mindestens eine Durchtrittsöffnung für das Gut zur Verfügung steht, darauf verzichtet werden, die an der Säule vorgesehenen Belüftungseinrichtungen so dicht zu setzen, dass dadurch ein durchgehender Förderkanal im Siloraum geschaffen werden könnte.

Soweit trotz der erfindungsgemässen Mittel ein Teil des Schüttguts verfestigt, klumpenförmig zum Siloauslauf gelangt, kann er durch bekannte Zerkleinerungsgeräte leicht zerkleinert und dadurch fliessfähig gemacht werden.

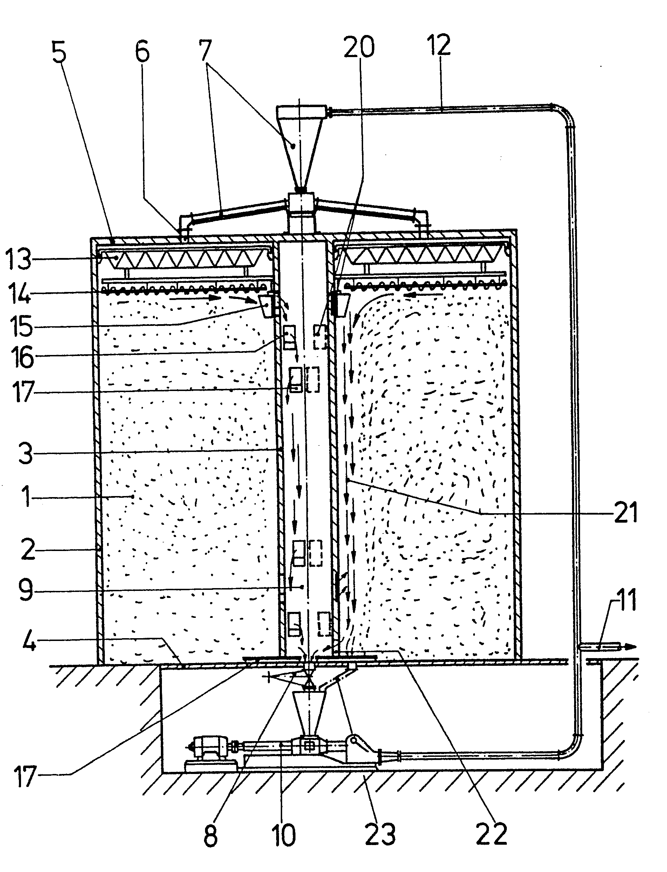

Die Erfindung wird im folgenden näher unter Bezugnahme auf die Zeichnung erläutert, die einen Vertikal-Mittelschnitt durch einen erfindungsgemässen Silo darstellt, wobei in der linken Hälfte eine erste und in der rechten Hälfte eine zweite Ausführungsform dargestellt ist.

Der Siloraum 1 wird aussen durch eine zylindrische Silowand 2 und innen durch eine konzentrisch zu der Wand 2 gelegene, zylindrische Mittelsäule 3, sowie unten durch den Boden 4 und oben durch die Silodecke 5 begrenzt. Das Gut wird dem Siloraum 1 durch mehrere am Umfang verteilte Deckenöffnungen 6 aufgegeben, denen das Gut durch geeignete Fördermittel 7 zugeführt wird. Der Siloauslass befindet sich bei 8 in der Mitte des Bodens des Säuleninnenraums 9. An den Siloauslass 8 schliesst sich eine Schneckenpumpe 10 und eine pneumatische Förderleitung 11 an. Von dieser kann das Gut über eine Zweitleitung 12 alternativ zum Siloraum 1 zurückgeführt werden.

Oberhalb des eingelagerten Guts befindet sich im Siloraum 1 eine sich im wesentlichen radial erstreckende, an der Mittelsäule 3 und ggf. auch an der Aussenwand 2 geführte, beispielsweise radial verlaufende Trägerkonstruktion 13, die angehoben und abgesenkt werden kann und oberhalb des eingelagerten Guts um die Säule 3 im Kreise geführt werden kann. Sie trägt eine radiale Förderschnecke 14, die während des Entleerungsbetriebs so angetrieben ist, dass sie von der Oberfläche des eingelagerten Guts Teile mechanisch ablöst und zur Silomitte zur Säule 3 hin befördert. In gleicher Höhe wie die Schnecke 14 oder etwas tiefer läuft in unmittelbarer Nähe der Säule 3 ein Schaufelkratzer 15 kontinuierlich um, der das von der Schnecke 14 herangeführte Gut im Kreislauf um die Säule führt. Die Säule enthält über die Höhe verteilt eine Vielzahl von in schraubenförmiger Folge angeordneten Öffnungen 16, die mit Höhenüberlappung angeordnet sind, so dass in jeder Arbeitshöhe zumindest eine Öffnung zur Verfügung steht. Zweckmässigerweise sind drei schraubenförmige Folgen solcher Öffnungen mit 120°-Versatz vorgesehen. In den unteren Öffnungslaibungen sind Belüftungseinrichtungen 17 bekannter Art vorgesehen. Die austretende Luft erleichtert zum einen den Durchtritt des Schüttguts aus dem Siloraum 1 in den Säuleninnenraum 9. Zum anderen tritt ein Teil der Luft aus den Öffnungen nach aussen in den Siloraum aus, wo sie zur Auflockerung des in der Nachbarschaft der Säule und insbesondere im Umlaufbereich des Kratzers 15 befindlichen Guts führt. Statt dessen oder zusätzlich können Belüftungseinrichtungen am Aussenumfang der Säule in Abstand von den Öffnungen 15 vorgesehen sein. Auch kann der Kratzer 15 als solcher mit Belüftungseinrichtungen ausgestattet sein. Schliesslich sind zweckmässigerweise am Boden des Säuleninnenraums Belüftungseinrichtungen 17 vorgesehen, wobei die Auslegung der Belüftungsstärke von der jeweils gewünschten Verfahrensweise abhängt.

Die links in der Zeichnung dargestellte erste Ausführungsform der Erfindung wird in folgender Weise betrieben.

Der Siloraum 1 wird durch die Aufgabeeinrichtung 6, 7 in üblicher Weise gefüllt, wobei der Förderer 13, 14, 15 sich zweckmässigerweise in höchstmöglicher Stellung befindet. Dabei läuft auch der Säuleninnenraum 9 durch die Öffnungen 15 hindurch voll. Wenn man befürchtet, dass sich das im Entleerungsweg befindende während der Lagerzeit so stark verfestigt, dass der Entleerungsweg sich später nur noch unter Schwierigkeiten eröffnen lässt, duldet man zunächst die Füllung des Säuleninnenraums 9 durch das Gut und entleert dann, wenn das Gut im Siloraum 1 sich so weit verfestigt hat, dass es bei Entleerung des Säuleninnenraums 9 nicht mehr nachfliesst, den Säuleninnenraum mittels der Abzugseinrichtungen 8 und 10 sowie der Umförderleitung 12 in den Siloraum 1. Bei Entleerungsbeginn sorgt man zunächst durch starke Belüftung der am Säulenumfang vorgesehenen Belüftungseinrichtung, insbesondere der Belüftungseinrichtungen 17 in den Öffnungen 16, für eine hinreichende Auflockerung des in der Nachbarschaft der Öffnungen im Siloraum 1 befindlichen Materials. Anschliessend fördert man durch Betätigung des Förderers 14, 15 das verfestigte und durch den Förderer aufgerissene Material den Öffnungen zu. Wenn der Säuleninnraum 9 zuvor entleert war, kann das darin niederfallende Gut durch den Siloauslauf 8 abgezogen werden. Wenn er gefüllt ist, ist es notwendig, das darin befindliche Gut durch starke Betätigung der Auflockerungseinrichtungen 17 zuvor fliessfähig zu machen und abzuziehen.

Bei der zweiten Ausführungsform, die in der rechten Zeichnungshälfte dargestellt ist, ist am Säulenumfang mindestens eine Folge von Belüftungseinrichtungen 20 angeordnet, die sich schraubenförmig vom höchsten Silofüllstand bis zum Silofuss zieht. Zweckmässigerweise ist eine Mehrzahl solcher Folgen von Belüftungseinrichtungen vorgesehen, beispielsweise drei Folgen, die am Umfang von jeweils 120° zueinander versetzt sind.

Wenn diese Belüftungseinrichtungen bei Entleerungsbeginn eingeschaltet werden, und zwar zweckmässigerweise schrittweise von oben nach unten, wobei, wie oben beschrieben, zunächst auch eine besonders starke Druckluftbeaufschlagung erfolgen kann, eröffnet sich zumindest entlang der Folge dieser Belüftungseinrichtungen, in vielen Fällen aber über den gesamten Umfang der Säule 3 ein pneumatisch fluidisierter Kanal 21, durch den das oben von dem Förderer 14, 15 aufgelockerte und zur Säule herangetragene Gut nach unten fliessen kann, wo es entweder durch eine Säulenöffnung 22 in das Innere der Säule zum Siloauslass 8 gelangen kann oder unmittelbar durch einen ausserhalb der Säule vorgesehenen Siloauslass 23 abgezogen werden kann.

**Patentansprüche**

1. Verfahren zum Füllen und Entleeren eines Silos zum Lagern von im Beschickungszustand fliessfähigem und sich im Laufe der Lagerzeit verfestigemden Schüttgut, insbesondere Flugasche, mit einem auf der Oberfläche des eingelagerten Schüttguts bewegbaren Förderer (14) zum Fördern von oberflächlich abgekratztem oder abgeschältem Schüttgut zu einem im Silo an einer im wesentlichen senkrechten Silowand angeordneten, das Gut fallend zu einer am Siloboden vorgesehenen Auslauföffnung befördernden Förderweg (9, 21), der über seine Höhe mit dem Siloraum (1) in Verbindung steht und eine sich über seine Länge erstreckende Belüftungseinrichtung zum Auflockern von im Förderweg (9, 21) befindlichem Schüttgut umfasst, dadurch gekennzeichnet, dass beim Füllen des Silos auch der Förderweg (9, 21) gefüllt wird und das ihn füllende Schüttgut erst dann aufgelockert und entleert wird, wenn das Schüttgut im Siloraum (1) sich so weit verfestigt hat, dass es bei Entleerung des Förderwegs (9, 21) nicht mehr in diesen nachfliesst.

2. Verfahren nach Anspruch 1, dadurch gekennzeichnet, dass der Förderweg (9, 21) bei Betriebsbeginn schrittweise von oben nach unten fortschreitend belüftet wird.

3. Verfahren nach Anspruch 1, dadurch gekennzeichnet, dass das zur Auslauföffnung beförderte Gut über eine an die Abzugsvorrichtung angeschlossene Zweigleitung (12) in den Siloraum (1) zurückgeführt wird.

4. Silo zur Durchführung des Verfahrens nach einem der Ansprüche 1 bis 3, das einen auf der Oberfläche des eingelagerten Schüttguts bewegbaren Förderer (14) zum Fördern von oberflächig abgekratztem oder abgeschältem Schüttgut zu einem im Silo an einer im wesentlichen senkrechten Silowand angeordneten, das Gut fallend zu einer am Siloboden vorgesehenen Auslauföffnung befördernden Förderweg (9, 21), der über seine Höhe mit dem Siloraum (1) in Verbindung steht und eine sich über seine Länge erstreckende Belüftungseinrichtung zum Auflockern von im Förderweg befindlichem Schüttgut umfasst, dadurch gekennzeichnet, dass der Förderweg (9, 21) dem im Beschickungszustand befindlichen Schüttgut frei zugänglich ist und die Belüftungseinrichtungen von einer Folge von schrittweise von oben nach unten einschaltbaren Belüftungselementen (17, 20) gebildet sind.

5. Silo nach Anspruch 4, dadurch gekennzeichnet, dass die Belüftungselemente (17, 20) am Umfang einer zentralen Säule (3) angeordnet sind und dass der auf der Oberfläche des Guts tätige Förderer einen in geringem Abstand von der Säule (3) rotierenden Kratzer (15) umfasst.

6. Silo nach Anspruch 5, dadurch gekennzeichnet, dass die Folge der Belüftungselemente (17, 20) die Säule (3) schraubenförmig umläuft.

7. Silo nach Anspruch 5 oder 6, dadurch gekennzeichnet, dass der Siloauslass (8) in der hohlen Säule (3) angeordnet ist und die Säulenwand in Bodennähe eine Durchtrittsöffnung (22) aufweist.

8. Silo nach Anspruch 5 oder 6, dadurch gekennzeichnet, dass die Siloauslassöffnung (23) am Fuss der Säule (3) ausserhalb derselben vorgesehen ist.

9. Silo nach Anspruch 5 oder 6, dadurch gekennzeichnet, dass der Siloauslass (8) in der hohlen Säule (3) angeordnet ist und die Säule eine Vielzahl von Öffnungen (16) in unterschiedlicher Höhe aufweist.

10. Silo nach Anspruch 9, dadurch gekennzeichnet, dass die Belüftungseinrichtungen (17) an oder in den Öffnungen (16) der Säule (3) vorgesehen sind.

11. Silo nach einem der Ansprüche 4 bis 10, dadurch gekennzeichnet, dass eine pneumatische Förderanlage (10, 11, 12) zum Fördern des in der hohlen Säule (3) enthaltenen Guts in den die Säule umgebenden Siloraum (1) vorgesehen ist.

12. Silo nach einem der Ansprüche 9 bis 11, dadurch gekennzeichnet, dass die Belüftungseinrichtungen (17) im Säuleninnenraum (9) vorgesehen sind.

**Claims**

1. A method of filling and emptying a silo for the storage of bulk material which can flow in the charging condition and which consolidates in the course of storage, in particular fly ash, having a conveyor (14) movable on the surface of the stored bulk material for conveying bulk material scraped or stripped off the surface to a conveying path (9, 21) disposed in the silo on a substantially vertical silo wall and conveying the material so that it drops to an outlet opening provided at the silo bottom, which conveying path is connected with the silo chamber (1) over its height and which comprises a ventilating means extending over its length for loosening bulk material situated in the conveying path (9, 21), characterised in that during the filling of the silo the conveying path (9, 21) is also filled and the bulk material filling it is only loosened and discharged when the bulk material in the silo chamber (1) has consolidated to such an extent that it no longer flows back into the conveying path (9, 21) when the latter is being discharged.

2. A method according to Claim 1, characterised in that at the start of operation the conveying path (9, 21) is progressively ventilated step by step from the top downwards.

3. A method according to Claim, characterised in that the material conveyed to the outlet opening is returned to the silo chamber (1) via a branch duct (12) connected to the discharge device.

4. A silo for carrying out the method according to any of Claims 1 to 3, which comprises a conveyor (14) movable on the surface of the stored bulk material for conveying bulk material scraped or stripped off the surface to a conveying path (9, 21) disposed in the silo on a substantially vertical silo wall and conveying the material so that it drops to an outlet opening provided at the silo bottom, which conveying path is connected with the silo chamber (1) over its height and which comprises a ventilating means extending over its length for loosening bulk material situated in the conveying path (9, 21), characterised in that the conveying path (9, 21) is freely accessible to the bulk material in the charging condition and the ventilating means is formed by a series of ventilating elements (17, 20) which can be cut in step by step from the top downwards.

5. A silo according to Claim 4, characterised in that the ventilating elements (17, 20) are disposed on the periphery of a central column (3) and in that the conveyor operating on the surface of the material comprises a scraper (15) rotating at a small distance from the column (3).

6. A silo according to Claim 5, characterised in that the series of ventilating elements (17, 20) rotate helically around the column (3).

7. A silo according to Claim 5 or 6, characterised in that the silo outlet (8) is disposed in the hollow column (3) and the column wall has an opening (22) in the vicinity of the bottom.

8. A silo according to Claim 5 or 6, characterised in that the silo outlet opening (23) is provided at the foot of the column (3) externally thereof.

9. A silo according to Claim 5 or 6, characterised in that the silo outlet (8) is disposed in the hollow column (3) and the column has a plurality of openings (16) at different heights.

10. A silo according to Claim 9, characterised in that the ventilating means (17) is provided at or in the openings (16) of the column (3).

11. A silo according to any of Claims 4 to 10, characterised in that a pneumatic conveying installation (10, 11, 12) is provided to convey the material contained in the hollow column (3) into the silo chamber (1) surrounding the column.

12. A silo according to any of Claims 9 to 11, characterised in that the ventilating means (17) is provided in the column interior (9).

**Revendications**

1. Procédé pour remplir et vider un silo pour le stockage d'un produit en vrac qui est fluide au moment où il est chargé et qui se consolide au cours du temps de stockage, en particulier, des cendres volantes, comportant un transporteur (14), qui est mobile à la surface supérieure du produit ensilé, pour transporter le produit accroché ou arraché à la surface vers un itinéraire d'acheminement (9, 21) qui est ménagé dans le silo sur une paroi de silo essentiellement verticale et qui achemine le produit tombant vers un orifice de décharge prévu sur le fond du silo, lequel itinéraire est en communication sur sa hauteur avec l'intérieur du silo (1) et comprend un dispositif de ventilation s'étendant sur sa longueur pour l'ameublissement du produit qui se trouve dans cet itinéraire (9, 21), caractérisé par le fait que, lors du remplissage du silo, l'itinéraire (9, 21) est aussi rempli et que le produit en vrac qui le remplit n'est ameubli et évacué qu'après que le produit contenu dans l'intérieur du silo (1) se soit consolidé au point que, lorsque l'itinéraire (9, 21) se vide, le produit ne puisse plus glisser dans celui-ci.

2. Procédé selon la revendication 1, caractérisé par le fait que l'itinéraire (9, 21) est ventilé au commencement des opérations en progressant pas à pas du haut en bas.

3. Procédé selon la revendication 1, caractérisé par le fait que le produit acheminé vers l'orifice de décharge est ramené dans l'intérieur du silo (1) par une dérivation (12) raccordée au dispositif d'extraction.

4. Silo pour la mise en œuvre du procédé selon l'une des revendications 1 à 3, comprenant un transporteur (14), qui est mobile à la surface supérieure du produit ensilé (5), en vue du transfert du produit accroché ou arraché à la surface vers un itinéraire d'acheminement (9, 21) qui est disposé dans le silo sur une paroi de silo essentiellement verticale et qui achemine le produit tombant vers un orifice de décharge ménagé sur le fond du silo, lequel itinéraire est en communication sur sa hauteur avec l'intérieur du silo (1) et comporte un dispositif de ventilation s'étendant sur sa longueur pour l'ameublissement du produit qui se trouve dans cet itinéraire (9, 21), caractérisé par le fait que l'itinéraire d'acheminement (9, 21) est librement accessible au produit tel qu'il est au moment de son chargement et que les dispositifs de ventilation sont constitués par une succession d'éléments de ventilation (17, 20), pouvant être en service les uns après les autres, de haut en bas.

5. Silo selon la revendication 4, caractérisé par le fait que les éléments de ventilation (17, 20) sont disposés sur la périphérie d'une colonne centrale (3) et que le transporteur qui travaille à la surface du produit comprend un râcloir (15) tournant à faible distance de la colonne (3).

6. Silo selon la revendication 5, caractérisé par le fait que les éléments de ventilation (17, 20) se succèdent à la manière d'une vis entourant la colonne (3).

7. Silo selon la revendication 5 ou 6, caractérisé par le fait que la sortie (8) du silo est disposée dans la colonne creuse et que la paroi de la colonne présente à proximité du fond un orifice de passage (22).

8. Silo selon la revendication 5 ou 6, caractérisé par le fait que l'orifice de décharge du silo (23) est prévu au pied de la colonne (3) en dehors de celle-ci.

9. Silo selon la revendication 5 ou 6, caractérisé par le fait que la sortie du silo 8 est disposée dans la colonne creuse (3) et que la colonne présente une multiplicité d'orifices (16) à différentes hauteurs.

10. Silo selon la revendication 9, caractérisé par le fait que les dispositifs de ventilation (17) sont prévus au bord des orifices (16) de la colonne (3) ou dans ceux-ci.

11. Silo selon l'une des revendications 4 à 10, caractérisé par le fait qu'il est prévu un système de transport pneumatique (10, 11, 12) pour le transport du produit contenu dans la colonne creuse (3) dans l'intérieur du silo (1) qui entoure la colonne.

12. Silo selon l'une des revendications 9 à 11, caractérisé par le fait que les dispositifs de ventilation (17) sont prévus dans la cavité intérieure (9) de la colonne.